# EUROPÄISCHE PATENTSCHRIFT

(11) **EP 1 587 396 B1**
(45) Veröffentlichungstag und Bekanntmachung des Hinweises auf die Patenterteilung: **17.05.2006**
(21) Anmeldenummer: 04705004.2
(22) Anmeldetag: 24.01.2004
(51) Int. Cl.: A47B 96/20, B29C 53/06, B27M 3/18

(54) **VERFAHREN ZUM HERSTELLEN EINES MÖBELKORPUS**
METHOD FOR THE PRODUCTION OF A FURNITURE BODY
PROCEDE DE PRODUCTION D'UN CORPS DE MEUBLE

(30) Priorität: 27.01.2003 DE 10302869
(43) Veröffentlichungstag der Anmeldung: 26.10.2005
(73) Patentinhaber: Riesmeier, Wilhelm, 32312 Lübbecke (DE)
(72) Erfinder: Riesmeier, Wilhelm, 32312 Lübbecke (DE)
(74) Vertreter: Elbertzhagen, Otto
(86) Internationale Anmeldenummer: PCT/EP2004/000591
(87) Internationale Veröffentlichungsnummer: WO 2004/066785

(56) Entgegenhaltungen:
- WO-A-00/65959
- DE-A- 3 109 965
- DE-C- 19 849 504
- PATENT ABSTRACTS OF JAPAN vol. 1999, no. 01, 29. Januar 1999 (1999-01-29) -& JP 10 281118 A (TAKEHIRO:KK), 20. Oktober 1998 (1998-10-20)

## Beschreibung

### TECHNISCHES GEBIET

Die Erfindung betrifft ein Verfahren zum Herstellen eines Möbelkorpus mit entlang gemeinsamer Eckkanten miteinander über Gehrungsflächen verbundenen Korpusseiten aus Holz oder holzartigen Werkstoffen. Bei diesem Verfahren wird in eine Platte aus einem solchen Werkstoff, die an der Außenseite eine Deckschicht aus einem Kunststoff oder einem anderen Furnier aufweist, von Innenseite aus entlang jeweils einer geraden Linie im Bereich der zu bildenden Korpus-Eckkanten eine V-förmige Nut bis an die Deckschicht heran eingeschnitten. Hiernach werden die voneinander abgeteilten Korpusseiten unter Schließen der Gehrungsflächen bildenden V-Nuten, in die zuvor ein Klebstoff eingegeben wird, gegeneinander geschwenkt, wobei die Deckschicht entlang der sich bildenden Eckkanten verformt oder gebrochen wird.

### STAND DER TECHNIK

Ein solches Verfahren ist aus der Offenlegungsschrift DE 31 09 965 A1 bekannt. In die V-förmige Nut, die sogenannte Gehrungsnut, wird bei diesem bekannten Verfahren vor dem Verschwenken der Korpusseiten gegeneinander ein elastischer Kleber eingebracht, der auf die Flanken der Gehrungsnut aufgesprüht wird. Dieser Kleber hat die Aufgabe, während des Verschwenkens oder Umfaltens die Korpusseiten zusammenzuhalten, ohne zusätzliche Verstärkungsstreifen auf die der Gehrungsnut abgelegene Seite der die Korpusseiten bildenden Platte aufkleben zu müssen. Problematisch hierbei ist, daß der elastische Kleber auf den Flächen der Gehrungsnut einen Film bilden soll, der nach dem Umfalten der Korpusseiten in der sich zwischen den aufeinanderliegenden Gehrungsflächen gebildeten Gehrungsfuge verbleibt. Trägt man im Hinblick auf ein paßgenaues Aufeinanderlegen der Gehrungsflächen den elastischen Kleber nur dünn auf, hat je nach der Stärke und dem Gewicht der Korpusseiten das von dem Kleber gebildete Filmscharnier keine ausreichende Festigkeit. Wählt man deshalb eine stärkere Filmdicke passen nach dem Umfalten der Korpusseiten die Gehrungsflächen nicht exakt aufeinander, wodurch sich ein Spalt im Bereich der Gehrungsfuge ergeben kann. Auch bedeckt der elastische Kleber einen erheblichen Teil der vom Plattenwerkstoff gebildeten Flächen der Gehrungsnut und sperrt diese Flächenseite gegen eine Verbindung mit dem weiter erforderlichen Montagekleber ab, der in die V-förmige Gehrungsnut zusätzlich eingebracht wird, um für eine dauerhafte, feste Verbindung der Korpusseiten im Bereich der Gehrungsfugen zu sorgen.

Ein Verfahren zum Herstellen eines Möbelkorpus anderer Art ist aus der Patentschrift DE 198 49 504 C1 bekannt. Hiernach wird im Bereich jeder Faltstelle der Ausgangsplatte vor dem Anbringen der V-Nut an der beim fertigen Korpus außenliegenden Seite durch die Deckschicht hindurch eine Nut eingeschnitten, die mit einem aushärtenden Kunststoffmaterial verfüllt wird. Dazu müssen von der gegenüberliegenden Plattenseite her Durchspritzkanäle in die Platte eingebohrt werden, die in die von der Außenseite der Ausgangsplatte her eingeschnittene Nut münden. Nach dem Erstarren des Kunststoffmaterials wird die V-Nut von der gegenüberliegenden Plattenseite her so eingeschnitten, daß der Scheitelbereich dieser V-Nut in dem zur Außenseite der Platte hin angeordneten Kunststoffmaterial liegt. Dieses Kunststoffmaterial ist in dem erstarrten Zustand ausreichend elastisch, um ein Filmscharnier zu bilden, über das beim Faltvorgang die gegeneinander zu verschwenkenden Korpüsseiten zusammengehalten werden. Die Schwierigkeit bei diesem Verfahren liegt darin, beim Einspritzen des Kunststoffmaterials die an der Außenseite der Ausgangsplatte liegende Nut auf ganzer Länge abzudichten, um sie vom Nutgrund aus bis zur Außenseite der Deckschicht hin vollständig mit dem Kunststoffmaterial ausfüllen zu können. Beim fertigen Korpus ist an den entlang der Gehrungsfugen außenliegenden Kanten das Kunststoffmaterial auffallend sichtbar, was in vielen Fällen aus gestalterischen Gründen als störend angesehen wird.

### DIE ERFINDUNG

Der Erfindung liegt die Aufgabe zugrunde, ein Verfahren der eingangs genannten Art zu schaffen, bei dem das das Filmscharnier bildende Kunststoffmaterial in einer Weise angebracht wird, die beim Umfalten der Korpusseiten das exakte Aufeinanderlegen der Gehrungsflächen nicht hindert und aufgrund deren die die Deckschicht an der Außenseite der die Korpusseiten bildenden Platte durch das Kunststoffmaterial stabilisiert wird.

Diese Aufgabe wird bei einem Verfahren der eingangs genannten Art dadurch gelöst, daß zwecks Ausbildung eines Schwenkscharniers vor dem Anbringen der V-Nuten an jeweils gleicher Stelle eine im Querschnitt kleinere Vornut bis zur Deckschicht eingeschnitten wird, die an der Deckschicht einen Nutgrund mit einer endlichen Breite hat, der sich zu beiden Seiten über den Scheitelbereich der nachträglich anzubringenden V-Nut hinaus erstreckt. In diese Vornut wird ein zunächst flüssiges, in der Vornut erstarrendes Kunststoffmaterial eingegeben, welches von der Deckschicht aus die Vornut zumindest über eine Teilhöhe ausfüllt und sich mit dem Werkstoff der Platte und der Deckschicht haftend verbindet. Danach wird die jeweilige V-Nut durch den Plattenwerkstoff und durch das erstarrte Kunststoffmaterial hindurch so eingeschnitten, daß zwischen dem Scheitelbereicht der V-Nut und der Deckschicht ein filmartiger, elastischer Ring des Kunststoffmaterials verbleibt.

Für die Erfindung ist wesentlich, daß das das Filmscharnier bildende, elastische Kunststoffmaterial im Bereich der V-Nut, der Gehrungsnut, selbst einen Teilabschnitt der Nutflanken als Gehrungsflächen bildet. Im Bereich des Nutgrundes der Vornut kann ein größeres Volumen des zunächst flüssigen Kunststoffmaterials vorgesehen werden, was eine intensivere Haftung an dem Material der Ausgangsplatte begünstigt, aus der die Korpusseiten voneinander abgeteilt werden. Dies gilt vor allem bei der Verwendung eines Spanplattenmaterials als Werkstoff für die Ausgangsplatte, welches eine relativ große Porösität aufweist. Beim Ausfüllen der Vornut dringt der noch flüssige Kunststoff in das Spanplattenmaterial ein und verkrallt sich darin, wodurch sich eine besonders hohe Haftfestigkeit ergibt. Nach dem Einschneiden der jeweiligen V-Nut durch das erstarrte Kunststoffmaterial hindurch bleibt eine ausreichend große Kontaktfläche des Kunststoffmaterials mit dem Plattenwerkstoff bestehen, deren Höhe in Tiefenrichtung der V-Nut gesehen weitaus größer als die Dicke des im Scheitelbereich der V-Nut verbleibenden filmartigen Stegs ist. Das Filmscharnier insgesamt wird nicht nur durch den filmartigen, elastischen Steg des Kunststoffmaterials im Scheitelbereich der V-Nut gebildet, sondern auch durch beidseits einstückig an diesen Steg anschließende Kunststoffstege von größerem Querschnitt, die nicht nur für eine sichere Anbindung des gesamten Scharniers an den Werkstoff der Ausgangsplatte bedingen, sondern darüber hinaus die beim Umfaltvorgang der Korpusseiten sich verformende oder brechende Deckschicht stabilisieren. Denn das Kunststoffmaterial verbindet oder verklebt sich fest auch mit der Deckschicht. Es ist also nicht der Werkstoff der Ausgangsplatte, der beidseits der Faltlinie die Deckschicht stützt, sondern das erstarrte Kunststoffmaterial. Da erst im nachhinein die Gehrungsnut bis in das Kunststoffmaterial hinein eingeschnitten wird, sind auch diejenigen Abschnitte der Gehrungsflächen, die durch das Kunststoffmaterial gebildet werden, exakt gestaltet und behindern ein paßgenaues Aufeinanderlegen der Gehrungsflächen beim Umfalten der Korpusseiten nicht.

Grundsätzlich kann die als erstes an der betreffenden Stelle in die Ausgangsplatte einzuschneidende Vornut einen weitgehend beliebigen Querschnitt haben, wenn sie nur über den Querschnitt der nachträglich anzubringenden Gehrungsnut nicht hinausragt mit Ausnahme des Nutgrundes, an dem die Vornut breiter als die Gehrungsnut im Scheitelbereich ist. Zweckmäßig hat die Vornut eine rechteckige Querschnittsform und wird senkrecht zur Plattenebene von der Außenseite der Ausgangsplatte her eingeschnitten, was mit einem geeigneten Fräser, insbesondere auch mit einem Sägeblatt, vorgenommen werden kann. Bezogen auf die im nachhinein anzubringende V-Nut bzw. Gehrungsnut erstreckt sich die Vornut spiegelsymmetrisch zu deren Symmetrieebene. Es versteht sich, daß die V-Nut nur entlang einer geraden Richtung angebracht werden kann, gleiches gilt für die zugehörige Vornut.

Wie bereits erwähnt, ist ein bevorzugter Werkstoff für die Ausgangsplatte ein Spanplattenmaterial, welches wegen seiner Porösität eine gute Haftung des das Filmscharnier bildende Kunststoffmaterials ermöglicht. Dieses Filmscharnier wird zum einen durch den filmartigen Steg des Kunststoffmaterials und zum anderen durch die dagegen im Querschnitt größeren Scharnierbänder gebildet, als welche die beidseits des filmartigen Steges ausgebildeten Kunststoffstege anzusehen sind, die zum einen an die Deckschicht und den Plattenwerkstoff angrenzen sowie daran fest anhaften und zum anderen im Scheitelbereich der V-Nut deren Flanken bilden. Um im Bereich der genannten Stege des Kunststoffmaterials eine noch innigere Verbindung vor allem mit dem Plattenwerkstoff zu erzielen, kann das flüssige Kunststoffmaterial auch mit Druck in die Vornut eingepreßt werden. Dies hängt je nach dem davon ab, wie die Viskosität des Kunststoffmaterials im flüssigen Zustand ist. Besonders gut eignet sich hierfür ein Polyurethan mit thermoplastischem Verhalten, denn dieser Kunststoff ist im verflüssigten Zustand ausreichend dünnflüssig und im erstarrten Zustand besonders zäh.

Für einen Toleranzausgleich kann es vorteilhaft sein, die V-Nut mit einer Abflachung im Scheitelbereich in die Platte einzuschneiden. Die Breite dieser Abflachung ist hierbei kleiner als die Breite der Vornut, deren Flanken beim Einbringen der V-Nut völlig weggeschnitten werden. So bleibt beidseits der Abflachung noch genügend Kunststoffmaterial zur Ausbildung der vorerwähnten Anbindungsstege bestehen.Je nach Art der an der Außenseite der Ausgangsplatte vorhandenen Deckschicht kann es zweckmäßig sein, vor dem Gegeneinanderschwenken der Korpusseiten die Deckschicht an der der V-Nut gegenüberliegenden Seite anzuritzen oder durchzuschneiden. Dies hängt davon ab, ob und gegebenenfalls wie die Deckschicht dehnfähig ist, je nachdem können durch die Elastizität der Deckschicht Bruchkanten an der Faltstelle ganz oder zumindest in einem erheblichen Umfange vermieden werden. Bei härteren Materialien, bei denen Bruchkanten nicht zu vermeiden sind, kann eine Glättung erfolgen, indem entlang der Eckkanten des fertigen Korpus eine Fase angeschnitten oder angeschliffen wird. Hierbei kann insbesondere in diagonaler Richtung zu der betreffenden Korpuseckkante die Deckschicht zumindest bis an das dahinterliegende, die Deckschicht stabilisierende Kunststoffmaterial heran abgetragen werden. Grundsätzlich kann die Deckschicht im Kantenbereich auch soweit entfernt werden, daß an der entsprechend abgeflachten Korpuseckkante das Kunststoffmaterial sichtbar wird, was unter anderem zu gestalterischen Zwecken genutzt werden kann.

### KURZBESCHREIBUNG DER ZEICHNUNGSABBILDUNGEN

Die Erfindung wird nachfolgend anhand der Zeichnung an einem Ausführungsbeispiel noch näher erläutert. Dabei zeigen:
- Fig. 1: die Seitansicht eines Abschnittes einer Platte zur Bildung von gegeneinander schwenkbaren Korpusseiten im Bereich einer der anzubringenden V-Nuten nach dem ersten Verfahrensschritt,
- Fig. 2: den Plattenabschnitt gemäß Fig. 1 nach dem zweiten Verfahrensschritt,
- Fig. 3: den Plattenabschnitt gemäß der vorstehenden Figuren nach dem Anbringen der V-Nut, der sogenannten Gehrungsnut,
- Fig. 4: eine vergrößerte Darstellung der Einzelheit bei X in Fig. 3,
- Fig. 5: eine Stirnansicht nach Fig. 3 der aus der Ausgangsplatte umgefalteten Korpusseiten e ines Korpus und
- Fig. 6: eine vergrößerte Darstellung der Einzelheit bei X in Fig. 5.

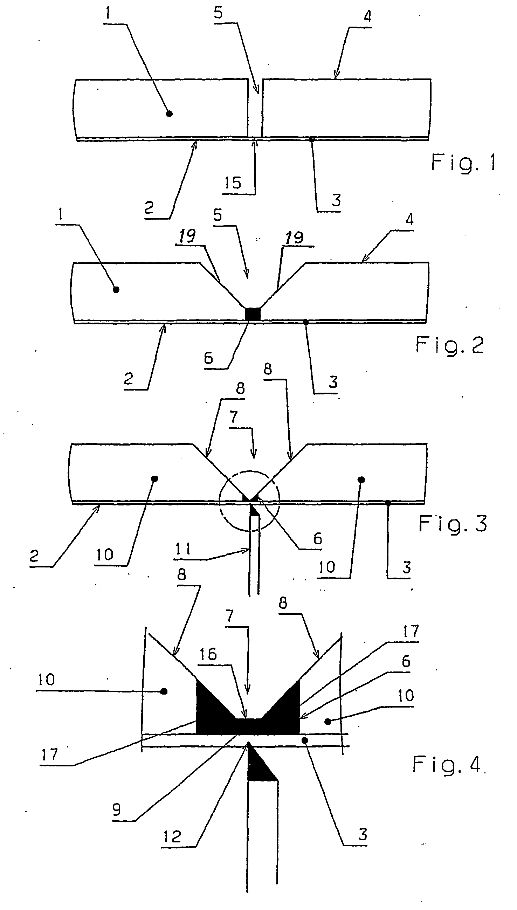

Im einzelnen veranschaulicht Fig. 1 den Abschnitt einer Ausgangsplatte 1 im Bereich einer der anzubringenden Gehrungsnuten, von denen in der Regel in der Platte 1 drei vorgesehen werden, um vier Korpusseiten voneinander abzuteilen, die zu einem rundum geschlossenen Korpus gefaltet werden können, der einen quadratischen oder rechteckigen Querschnitt hat. Bei dem fertigen Korpus gibt es eine Außenseite, die von der in der Darstellung untenliegenden Seite 2 der Platte 1 gebildet wird, und an der die Platte 1 mittels einer Deckschicht 3 kaschiert ist. Dieser im nachhinein als Außenseite 2 der Platte 1 bezeichneten Seite liegt eine Innenseite 4 gegenüber, die im nachhinein beim fertigen Korpus nach innen hin angeordnet ist. Die Innenseite 4 der Platte 1 kann ebenfalls mit einer Deckschicht kaschiert sein, für das auszuübende Verfahren ist dies ohne Bedeutung.

Entlang einer geraden Querlinie wird von der Innenseite 4

Entlang einer geraden Querlinie wird von der Innenseite 4 der Platte 1 her eine Vornut 5 eingeschnitten, die bis an die Deckschicht 3 an der Außenseite 2 der Platte 1 heranreicht. Die Vornut 5 hat zunächst einen rechteckigen Querschnitt und wird senkrecht zu der Ebene der Platte 1 eingeschnitten. Die Vornut 5 hat einen Nutgrund 15 von endlicher Breite, welcher der Breite der Vornut 5 entspricht. Die Vornut 5 wird mittels eines schmalen Fräsers oder eines Sägeblattes eingeschnitten, in praktischer Ausführung hat sie damit eine Breite in der Größenordnung von 3 mm.

Wie aus Fig. 2 hervorgeht, wird in die Vornut 5 ein Kunststoffmaterial 6 eingebracht, und zwar in flüssiger Form. Je nachdem welche Dimension die Düse hat, mittels der das Kunststoffmaterial 6 in die Vornut 5 eingegeben wird, kann zuvor im oberen, zur Innenseite 4 der Platte 1 hin liegenden Bereich eine Erweiterung der Vornut 5 vorgesehen werden, die unabhängig davon in ihrem unteren Bereich oberhalb des Nutgrundes 15 einen rechteckigen oder quadratischen Querschnitt behält. Insoweit hat beim dargestellten Ausführungsbeispiel die Vornut 5 gemäß Fig. 2 im oberen Bereich geschrägte Flanken 19. Von der Deckschicht 3 aus, die den Nutgrund 15 bildet, reicht das eingefüllte Kunststoffmaterial 6 über eine Teilhöhe der Vornut 5. Ist die Vornut 5, wie in Fig. 2 dargestellt, nach oben hin erweitert, reicht die Füllhöhe des Kunststoffmaterials 6 zweckmäßig über den rechteckigen oder quadratischen Querschnittsbereich der Vornut 5. Das zunächst flüssige Kunststoffmaterial 6 erstarrt in der Vornut 5, im erstarrten Zustand ist das Kunststoffmaterial jedoch elastisch.

Wie Fig. 3 verdeutlicht, wird symmetrisch zu der Mittenebene der Vornut 5, die quer zur Plattenlängsrichtung verläuft und senkrecht auf der Plattenebene steht, eine V-Nut 7 als Gehrungsnut eingeschnitten. Der Winkel der V-Nut 7 beträgt 90°, dementsprechend stehen die Flanken 8 der V-Nut 7 senkrecht zueinander. Beim Anbringen der V-Nut 7 wird ein Teil des in die Vornut 5 eingebrachten Kunststoffmaterials 6 entfernt. Es wird die gesamte Kontur der Vornut 5 beim Anbringen der V-Nut 7 weggeschnitten, denn die Vornut 5 hat einen erheblich kleineren Querschnitt als die V-Nut 7. Dies gilt auch dann, wenn, wie in Fig. 2 dargestellt, die Vornut 5 in ihrem oberen Bereich erweitert ist.

Wie aus Fig. 4 hervorgeht, wird die V-Nut 7 soweit in das erstarrte Kunststoffmaterial 6 eingeschnitten, daß zwischen dem Scheitel der V-Nut und der Deckschicht 3 ein Steg 9 des Kunststoffmaterials 6 verbleibt. Da die Breite der Vornut 5 am Nutgrund 15 (Fig. 1) größer als die Breite der V-Nut 7 im Scheitelbereich ist, bildet das Kunststoffmaterial 6 nach eingeschnittener V-Nut 7 beidseits des Steges 9 Anbindungsstege 17, über die ein besonders guter Verbund des Kunststofmaterials 6 mit dem Werkstoff der Ausgangsplatte 1 besteht. Die Anbindungsstege 17, die sich entlang der V-Nut 7 beidseits erstrecken, können sozusagen als Scharnierbänder angesehen werden, die im vorliegenden Falle einstückig mit dem Steg 9 sind. Insgesamt hat das Kunststoffmaterial 6 nach dem Einschneiden der V-Nut 7 ein Querschnittsprofil nach Art eines Schwalbenschwanzes, wobei im Scheitelbereich die V-Nut 7 eine Abflachung 16 aufweisen kann.

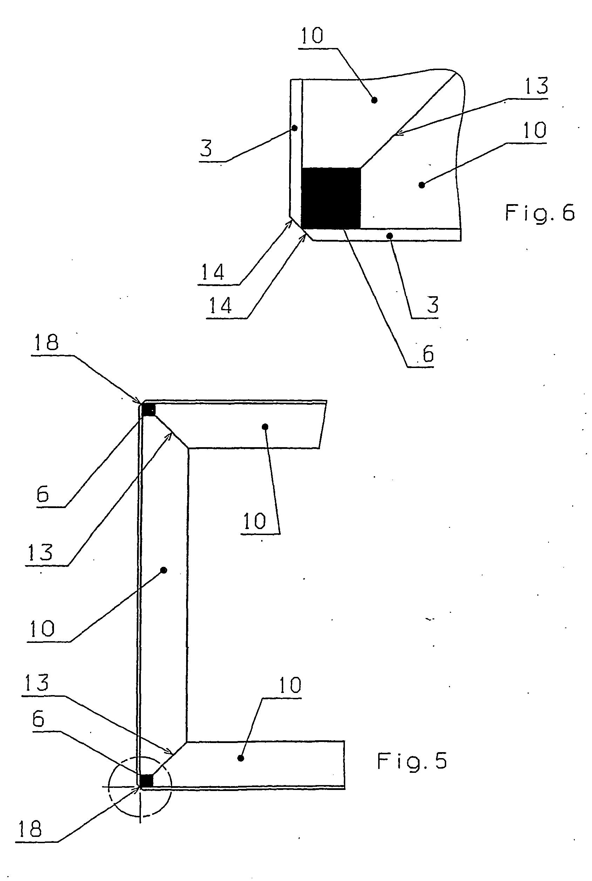

Durch Anbringen der V-Nuten 7, der Gehrungsnuten, werden aus der Ausgangsplatte 1 Korpusseiten 10 voneinander abgeteilt, die um 90° gegeneinander unter Schließen der V-Nuten 7 geschwenkt werden. Hierbei bildet der Steg 9 des Kunststoffmaterials 6 ein sogenanntes Filmscharnier, welches die Korpusseiten 10 zusammenhält. Hierfür hat zumindest im Bereich des Steges 9 das erstarrte Kunststoffmaterial eine ausreichende Elastizität. Beim Schwenken oder Umfalten der Korpusseiten 10 wird entweder die Deckschicht 3 über die sich bildende äußere Korpus-Eckkante 18 (Fig. 5) hinweg gedehnt oder die Deckschicht 3 bricht entlang dieser Eckkante 18 auf. Hierzu kann eine Schwächung der Deckschicht 3 vorgesehen werden, indem von der Außenseite 2 der Korpusseiten 10 her die Deckschicht 3 eingeritzt wird, was mittels des in Fig. 3 dargestellten Werkzeugs 11 geschieht. Dadurch entsteht ein schmaler Schnittspalt 12, wie er in Fig. 4 angedeutet ist.

Die Figuren 5 und 6 veranschaulichen, daß nach dem Umfalten der Korpusseiten 10 das das Filmscharnier bildende Kunststoffmaterial 6 entlang der äußeren Korpus-Eckkanten 18 nach innen hin liegt und von der Deckschicht 3 verdeckt wird. Die Ausbildung einer sauberen Gehrungsfuge 13, in deren Bereich die Flanken 8 der V-Nuten 7 aufeinanderliegen, wird durch das die Nutenflanken 8 teilweise bildende Kunststoffmaterial 6 nicht behindert. Entlang der äußeren Korpus-Eckkanten 18 können die daran angrenzenden Stirnkanten der nunmehr über Eck stehenden beiden Abschnitte der Deckschicht 3 der Korpusseiten 10 versäubert werden, indem hier Fasen 14 angeschliffen oder angeschnitten werden. Wichtig in diesem Zusammenhang ist, daß die Deckschicht 3 bzw. die an die Korpuseckkanten 18 heranreichenden Abschnitte der Deckschicht 3 fest mit dem Kunststoffmaterial 6 verklebt sind, so also insbesondere auch im Bereich des das Filmscharnier bildenden Steges 9, womit entlang der Biege- oder Bruchlinie die Deckschichten 3 durch das Kunststoffmaterial 6 verstärkt sind. In diagonaler Richtung zur jeweiligen Korpuseckkante 18 können die Fasen 14 bis an das Kunststoffmaterial 6 heran oder in dieses hinein angebracht werden, wodurch das Kunststoffmaterial 6 im Bereich des gefalteten filmartigen Steges 9 mehr oder weniger sichtbar wird. Aufgrund einer sicheren Verklebung zwischen den Endabschnitten der Deckschicht 3 und dem Kunststoffmaterial 6 besteht die Gefahr einer Ablösung der Deckschicht 3 im Bereich der Korpuseckkanten 18 nicht. Dieser Vorteil besteht selbstverständlich auch dann, wenn auf einer Anbringung der Fasen 14 an den Endabschnitten der Deckschicht 3 verzichtet wird.

## Patentansprüche

1. Verfahren zum Herstellen eines Möbelkorpus mit entlang gemeinsamer Eckkanten miteinander über Gehrungsflächen verbundenen Korpusseiten (10) aus Holz oder holzartigen Werkstoffen, bei dem in eine Platte (1) aus einem solchen Werkstoff, die an der beim fertigen Korpus außenliegenden Seite, der Außenseite (2), eine Deckschicht (3) aus einem Kunststoff oder einem Furnier aufweist, von der davon wegliegenden Innenseite (4) aus entlang jeweils einer geraden Linie im Bereich der zu bildenden Eckkanten eine V-förmige Nut (7) bis an die Deckschicht (3) heran eingeschnitten wird, wonach die hierdurch voneinander abgeteilten Korpusseiten (10) unter Schließen der mit ihren Flanken (8) die Gehrungsflächen bildenden V-Nuten (7), in die zuvor ein Klebstoff eingegeben wird, gegeneinander geschwenkt werden, wobei die Deckschicht (3) entlang der sich bildenden Eckkanten verformt oder gebrochen wird,
**dadurch gekennzeichnet,**
**daß** vor dem Anbringen der V-Nuten (7) an jeweils gleicher Stelle eine im Querschnitt kleinere Vornut (5) bis zur Deckschicht (3) hin eingeschnitten wird, die an der Deckschicht (3) einen Nutgrund (15) mit einer endlichen Breite hat, der sich zu beiden Seiten über den Scheitelbereich der nachträglich anzubringenden V-Nut (7) hinaus erstreckt, und in diese Vornut (5) ein zunächst flüssiges, in der Vornut (5) erstarrendes sowie nach dem Erstarren zumindest in querschnittsschwachen Bereichen elastisch bleibendes Kunststoffmaterial (6) eingegeben wird, welches von der Deckschicht (3) aus die Vornut (5) zumindest über eine Teilhöhe ausfüllt und sich mit dem Werkstoff der Platte (1) so wie dem der Deckschicht (3) haftend verbindet, wonach die jeweilige V-Nut (7) durch den Plattenwerkstoff und durch das erstarrte Kunststoffmaterial (6) hindurch so eingeschnitten wird, daß zwischen dem Scheitelbereich der V-Nut (7) und der Deckschicht (3) ein filmartiger, elastischer Steg (9) des Kunststoffmaterials (6) verbleibt.

2. Verfahren nach Anspruch 1,
**dadurch gekennzeichnet,**
**daß** die Vornut (5) zumindest im Bereich ihres Nutgrundes (15) mit einer rechteckigen oder quadratischen Querschnittsform symmetrisch zu der zur Plattenebene senkrechten Querebene durch die Linie, entlang der die V-Nut (7) im nachhinein eingeschnitten wird, ausgebildet wird.

3. Verfahren nach Anspruch 1 oder 2,
**dadurch gekennzeichnet,**
**daß** als Plattenwerkstoff ein Spanplattenmaterial verwendet wird.

4. Verfahren nach einem der Ansprüche 1 - 3,
**dadurch gekennzeichnet,**
**daß** als Kunststoffmaterial (6) ein Polyurethan mit thermoplastischen Verhalten verwendet wird.

5. Verfahren nach einem der Ansprüche 1- 4,
**dadurch gekennzeichnet,**
**daß** das Kunststoffmaterial (6) mit Druck in die Vornut (5) eingepreßt wird.

6. Verfahren nach einem der Ansprüche 1 - 5,
**dadurch gekennzeichnet,**
**daß** die V-Nut (7) mit einer Abflachung (16) im Scheitelbereich eingeschnitten wird, wobei die Breite dieser Abflachung (16) kleiner als die Breite der Vornut (5) an ihrem Nutgrund (15) ist.

7. Verfahren nach einem der Ansprüche 1 - 6,
**dadurch gekennzeichnet,**
**daß** vor dem Gegeneinanderschwenken der Korpusseiten (10) die Deckschicht (3) an der von der V-Nut (7) abliegenden Seite entlang der Scheitellinie der V-Nut (7) eingeschnitten oder durchgeschnitten wird.

8. Verfahren nach einem der Ansprüche 1 - 7,
**dadurch gekennzeichnet,**
**daß** nach dem Gegeneinanderschwenken der Korpusseiten (10) die Schnitt- oder Bruchkanten der Deckschicht (3) entlang der Korpuseckkanten zwecks Anbringung einer glatten Fase (14) beschnitten oder beschliffen werden.

9. Verfahren nach Anspruch 8,
**dadurch gekennzeichnet,**
**daß** beim Anbringen der Fasen (14) an die Schnitt- oder Bruchkanten der Deckschicht (3) das Kunststoffmaterial (6) im Bereich des gefalteten Steges (9) angeschnitten wird.

## Claims

1. Method for fabricating a furniture body from wood or wood-type materials with carcass sides (10) connected to one another along common corner edges through mitre faces, wherein in a panel (1) of such a material which has on the side on the outer side of the finished carcass body, the outside (2), a cover layer (3) of plastics or veneer, a V-shaped groove (7) is cut in from the inside (4) (of the panel) which is remote from the cover layer along straight lines in the region of the corner edges which are to be formed down to the cover layer (3), after which the carcass sides (10) which are hereby divided off are swivelled towards one another thereby closing the V-grooves (7) which have previously been provided with adhesive and which with their flanks (8) form the mitre faces, whereby the cover layer (3) is deformed or broken along the corner edges which are thereby formed,
**characterised in that**
before making the V-grooves (7) each time at the same place an initial groove (5) of smaller cross section is cut in down to the cover layer (3) and has at the cover layer (3) a groove base (15) with a final width which extends on each side beyond the apex area of the V-groove (7) which is subsequently to be provided, and into this initial groove (5) is inserted a plastics material (6) which is at first fluid, solidifies in the initial groove (5) and then after solidification remains elastic at least in the areas which have a weak cross-section, wherein the adhesive material fills out from the cover layer (3) the initial groove (5) at least over a partial height and then bonds adhesively with the material of the panel (1) as well as with that of the cover layer (3) after which the relevant V-groove (7) is cut in through the panel material and through the solidified plastics material (6) so that a film-type elastic web (9) of the plastics material (6) remains between the apex area of the V-groove (7) and the cover layer (3).

2. Method according to claim 1,
**characterised in that**
the initial groove (5) is designed at least in the region of its groove base (15) with a rectangular or square cross-sectional shape symmetrical with the transverse plane perpendicular to the plane of the panel through the line along which the V-groove (7) is then cut in.

3. Method according to claim 1 or 2,
**characterised in that**
a chipboard material is used as the panel material.

4. Method according to one of claims 1 to 3,
**characterised in that**
a polyurethane with thermoplastics qualities is used as the plastics material (6).

5. Method according to one of claims 1 to 4,
**characterised in that**
the plastics material (6) is forced into the initial groove (5) under pressure.

6. Method according to one of claims 1 to 5,
**characterised in that**
the V-groove (7) is cut in with a flattened area (16) in the apex area whereby the width of this flattened area (16) is smaller than the width of the initial groove (5) at its groove base (15).

7. Method according to one of claims 1 to 6,
**characterised in that**
before swivelling the carcass sides (10) towards one another the cover layer (3) is cut in or through on the side remote from the V-groove (7) along the apex line of the V-groove (7).

8. Method according to one of claims 1 to 7,
**characterised in that**
after swivelling the carcass sides (10) towards one another the cut or broken edges of the cover layer (3) are cut or ground along the carcass corner edges for the purpose of providing a smooth chamfer (14).

9. Method according to claim 8,
**characterised in that**
when providing the chamfer (14) at the cut or broken edges of the cover layer (3) the plastics material (6) is cut in in the region of the folded web (9).

## Revendications

1. Procédé pour la production d'un corps de meuble avec des côtés (10) en bois ou en matériaux analogues au bois, reliés ensemble, le long de d'arêtes d'angles communes, par l'intermédiaire de surfaces en onglet, dans le cadre duquel, dans un panneau (1) en un tel matériau, lequel présente sur le côté situé à l'extérieur du corps de meuble fini, le côté extérieur (2), une couche de recouvrement (3) en matière synthétique ou un contre-plaqué, une encoche en forme de V (7) est découpée jusqu'à la couche de recouvrement (3) à partir du côté intérieur (4) opposé, respectivement le long d'une ligne droite, dans la région des bords angulaires à former, ce après quoi les côtés (10) du corps, ainsi séparés l'un de l'autre, sont pivotés l'un contre l'autre, en fermant les encoches en V (7), qui forment avec leurs flancs (8) les surfaces en onglet et dans lesquelles une colle a été appliquée, la couche de recouvrement (3) étant alors déformée ou rompue long des bords angulaires se formant,
**caractérisé en ce que**,
avant la réalisation des encoches en V (7), respectivement au même endroit, une encoche préliminaire (5) de section transversale plus petite, est entaillée jusqu'à la couche de recouvrement, laquelle présente, sur la couche de recouvrement (3) un fond d'encoche (15), d'une largeur limitée, qui s'étend des deux côtés, au-delà de la zone de sommet de l'encoche en V (7) à réaliser ultérieurement, et que dans cette encoche préliminaire (5) est introduite une matière synthétique (6) tout d'abord liquide, se solidifiant ensuite et demeurant élastique, au moins dans les zones de faible section, qui, à partir de la couche de recouvrement (3), remplit l'encoche préliminaire (5) au moins sur une partie de la hauteur et se lie par adhésion au matériau du panneau (1) ainsi qu'à celui de la couche de recouvrement (3), ce après quoi l'encoche en V respective (7) est taillée, à travers la matériau du panneau et la matière synthétique consolidée (6), de sorte qu'une mince patte élastique (9) de matière synthétique (6) demeure entre la zone de sommet de l'encoche en V (7) et la couche de couverture (3).

2. Procédé selon la revendication 1,
**caractérisé en ce que**
l'encoche préliminaire (5), tout au moins dans la zone de son fond d'encoche (15), est formée, avec une section transversale de forme rectangulaire ou carrée, symétriquement au plan perpendiculaire au plan du panneau, par une ligne, le long de laquelle l'encoche en V (7) est entaillée ultérieurement.

3. Procédé selon la revendication 1 ou 2,
**caractérisé en ce que**,
comme matériau pour les panneaux, on emploie des plaques d'agglomérés.

4. Procédé selon l'une des revendications 1 à 3,
**caractérisé en ce que**,
comme matière synthétique (6), un polyuréthane à comportement thermoplastique est utilisé.

5. Procédé selon l'une des revendications 1 à 4,
**caractérisé en ce que**
la matière synthétique (6) est enfoncée sous pression dans l'encoche préliminaire (5).

6. Procédé selon l'une des revendications 1 à 5,
**caractérisé en ce que**
l'encoche en V (7) est entaillée avec une portion plate (16) dans la zone de sommet, la largeur de cette portion plate(16) étant plus petite que la largeur de l'encoche préliminaire (5) au fond de l'encoche (5).

7. Procédé selon l'une des revendications 1 à 6,
**caractérisé en ce que**,
avant le pivotement des côtés (10) du corps l'un contre l'autre, la couche de recouvrement (3) est entaillée ou coupée complètement sur le côté opposé à l'encoche en V (7), le long de la ligne de sommet de l'encoche en V (7).

8. Procédé selon l'une des revendications 1 à 7,
**caractérisé en ce que**,
après le pivotement des côtés (10) du corps l'un contre l'autre, les bords coupés ou cassés de la couche de recouvrement (3) sont rognés ou meulés le long des arêtes d'angles du corps, aux fins de réalisation d'un chanfrein lisse (14).

9. Procédé selon la revendication 8,
**caractérisé en ce que**,
lors de l'application des fibres (14) sur les bords de coupe ou de rupture de la couche de recouvrement (3), la matière synthétique (6) est entaillée dans la zone de la patte pliée (9).
